# EUROPEAN PATENT APPLICATION

(11) **EP 4 683 334 A1**
(43) Date of publication of application: **21.01.2026**
(21) Application number: 24770012.3
(22) Date of filing: 14.03.2024
(51) Int. Cl.: H04N 21/4788

(54) **LIVESTREAMING INTERFACE PROCESSING METHOD AND APPARATUS, DEVICE, AND STORAGE MEDIUM**

(30) Priority: 16.03.2023 CN 202310271937
(71) Applicant: Beijing Zitiao Network Technology Co., Ltd., Beijing 100190 (CN)
(72) Inventor: GUO, Yunguang, Beijing 100028 (CN); GONG, Xinwei, Beijing 100028 (CN); ZHANG, Wei, Beijing 100028 (CN); GAO, Sihan, Beijing 100028 (CN)
(74) Representative: Marks & Clerk LLP
(86) International application number: PCT/CN2024/081763
(87) International publication number: WO 2024/188322

(57) **Abstract**

Embodiments of the present disclosure provide a method and apparatus for processing a live streaming interface, a device, and a storage medium. The live streaming interface includes a plurality of layers of views, and includes at least one microphone slot area. The method includes: determining, for each microphone slot area, a microphone slot type of the microphone slot area, wherein the microphone slot type comprises any of: a video microphone slot, a voice microphone slot, and an available microphone slot; and processing at least part of views in the plurality of layers of views according to the microphone slot type.

## Description

### CROSS-REFERENCE TO RELATED APPLICATION(S)

The present application claims priority to Chinese Patent Application No. 202310271937.1, entitled "LIVESTREAMING INTERFACE PROCESSING METHOD AND APPARATUS, DEVICE, AND STORAGE MEDIUM", filed with the China National Intellectual Property Administration on March 16, 2023, which is incorporated by reference in its entirety.

### FIELD

Embodiments of the present disclosure relate to the technical field of interface processing, and in particular, to a livestreaming interface processing method and apparatus, a device, and a storage medium.

### BACKGROUND

In recent years, live video streaming has brought people a more real-time experience. The live video streaming further includes a representation form of microphone connected live streaming. In the relevant microphone connected live streaming, a live streaming interface probably fails to achieve diverse displays, or an implementation solution for the diverse displays is complex and inefficient.

### SUMMARY

Embodiments of the present disclosure provide a method and apparatus for processing a live streaming interface, a device, and a storage medium, which enrich microphone slot display methods and improve display efficiency.

In a first aspect, embodiments of the present disclosure provide a method for processing a live streaming interface. The live streaming interface includes a plurality of layers of views, and includes at least one microphone slot area, and the method includes:
determining, for each microphone slot area, a microphone slot type of the microphone slot area, wherein the microphone slot type comprises any of: a video microphone slot, a voice microphone slot, and an available microphone slot; and
processing at least part of views in the plurality of layers of views according to the microphone slot type.

In a second aspect, embodiments of the present disclosure further provide an apparatus for processing a live streaming interface. The live streaming interface includes a plurality of layers of views, and includes at least one microphone slot area, and the apparatus includes:
a microphone slot type determination module, configured to determine, for each microphone slot area, a microphone slot type of the microphone slot area, wherein the microphone slot type comprises any of: a video microphone slot, a voice microphone slot, and an available microphone slot; and
a view processing module, configured to process at least part of views in the plurality of layers of views according to the microphone slot type.

In a third aspect, embodiments of the present disclosure further provide an electronic device. The electronic device includes:
one or more processors; and
a storage apparatus, configured to store one or more programs,
where the one or more programs, when executed by the one or more processors, cause the one or more processors to implement the method for processing a live streaming interface according to the embodiments of the present disclosure.

In a fourth aspect, embodiments of the present disclosure further provide a storage medium including computer-executable instructions. The computer-executable instructions, when executed by a computer processor, are configured to perform the method for processing a live streaming interface according to the embodiments of the present disclosure.

According to the method and apparatus for processing a live streaming interface, the device, and the storage medium according to the embodiments of the present disclosure, the live streaming interface includes the plurality of layers of views, and includes the at least one microphone slot area. The method includes: determining, for each microphone slot area, the microphone slot type of the microphone slot area, where the microphone slot type includes any one of the following: the video microphone slot, the voice microphone slot, and the available microphone slot; and processing the at least part of views in the plurality of layers of views according to the microphone slot type.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of a method for processing a live streaming interface according to embodiments of the present disclosure;
FIG. 2 is an example diagram of a live streaming interface according to embodiments of the present disclosure;
FIG. 3 is a principle diagram of a method for processing a live streaming interface according to embodiments of the present disclosure;
FIG. 4 is a schematic diagram of a structure of an apparatus for processing a live streaming interface according to embodiments of the present disclosure; and
FIG. 5 is a schematic diagram of a structure of an electronic device according to embodiments of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of" mentioned in the present disclosure are illustrative and not limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

It should be understood that before the use of the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, a prompt message is sent to the user to clearly inform the user that a requested operation will require access to and use of the personal information of the user. As such, the user can independently choose, according to the prompt message, whether to provide the personal information to software or hardware, such as an electronic device, an application, a server, or a storage medium, that performs the operations of the technical solutions of the present disclosure.

As an optional but non-limiting implementation, in response to the reception of the active request from the user, the method for sending the prompt message to the user may be, for example, a pop-up window, in which the prompt message may be presented in text. Further, the pop-up window may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

It should be understood that data (including but not limited to the data itself, and data acquisition, or usage) involved in the technical solutions should comply with the requirements of corresponding laws and regulations, and relevant stipulations.

In the related art, rendering layers of a video live streaming room may be sequentially a microphone slot layer, a theme layer, and a stream pulling player layer from top to bottom. A theme layer view is not displayed in the entire microphone slot area (i.e., the user can only see a theme outside the microphone slot area).For a microphone slot with a microphone connected video, a view of the microphone slot layer is not displayed, so that a video below the microphone slot layer can be seen, and for a microphone slot with no microphone connected video, a set color is added to the view of the microphone slot layer. The above method has the following defects that the theme is not displayed at an available microphone slot, making it difficult for the available microphone slot to adapt well to the theme.

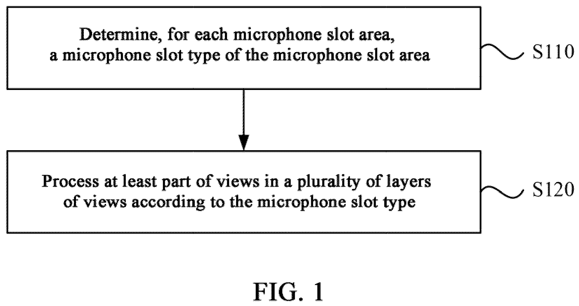

FIG. 1 is a schematic flowchart of a method for processing a live streaming interface according to embodiments of the present disclosure. These embodiments of the present disclosure are applicable to a case of processing a live streaming interface view. The method may be performed by an apparatus for processing a live streaming interface. The apparatus may be implemented in the form of software and/or hardware, and is optionally implemented through an electronic device. The electronic device may be a mobile terminal, a personal computer (PC) terminal, a server, or the like.

As shown in FIG. 1, the method comprises the following steps:
S110: For each microphone slot area, a microphone slot type of the microphone slot area is determined.

The microphone slot type includes any of the following: a video microphone slot, a voice microphone slot, and an available microphone slot. In these embodiments, in a live streaming process, a streamer may interact with viewers in a live streaming room through a co-streaming, and the viewers who join the co-streaming may be referred to as "guests". The guest may select a video co-streaming or a voice co-streaming. If the video co-streaming is selected, a video image may be displayed in a corresponding microphone slot area, and audio may be played in the live streaming room. If the voice co-streaming is selected, the video image of the guest is not displayed in the microphone slot area, and the audio of the guest may be played in the live streaming room. The available microphone slot may be understood as a microphone slot area where no viewer has the co-streaming.

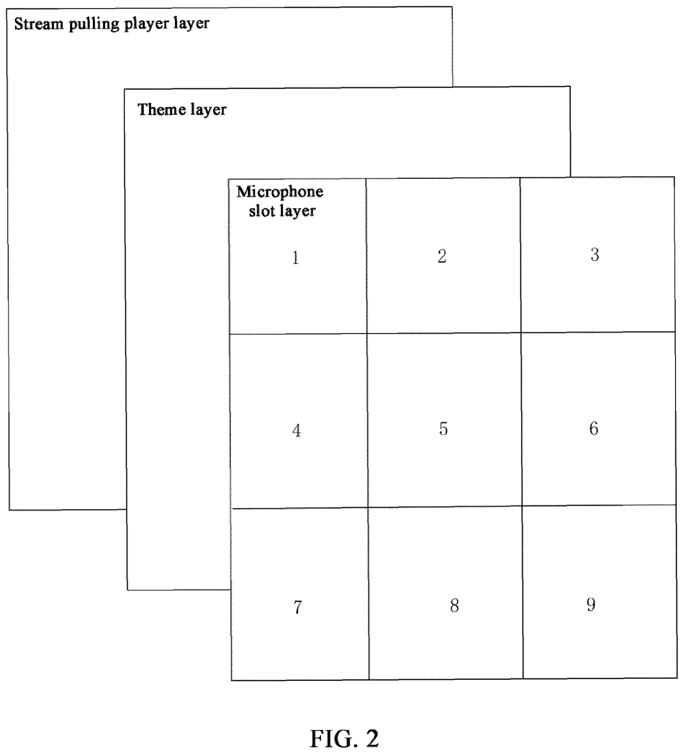

In these embodiments, the live streaming interface includes three layers of views and includes at least one microphone slot area. The three layers of views are a microphone slot layer view, a theme layer view, and a stream pulling player layer view respectively. Exemplarily, FIG. 2 is an example diagram of a live streaming interface according to an embodiment. As shown in FIG. 2, the live streaming interface includes three layers of views, which are sequentially the microphone slot layer view, the theme layer view, and the stream pulling player layer view from top to bottom, and also includes nine microphone slot areas, namely, the streamer may simultaneously interact with nine viewers through the co-streaming. The number of the microphone slot areas is preset when developing the live streaming room, or may also be selected by the streamer when starting the broadcast, which is not limited herein.

Specifically, a method for determining a microphone slot type of a microphone slot area may include: acquiring a field identification relevant to the type of the microphone slot area; and determining the microphone slot type of the microphone slot area according to the field identification.

The field identification may be acquired from a server side. In these embodiments, a client may acquire relevant information of each microphone slot area from a server. The relevant information includes field identifications relevant to types. Specific fields in the field identifications may indicate a current microphone slot type of each microphone slot area. If the microphone slot type is the video microphone slot, it indicates that the guest at the microphone slot is in video co-streaming with the streamer; if the microphone slot type is the voice microphone slot, it indicates that the guest at the microphone slot is in voice co-streaming with the streamer; and if the microphone slot type is the available microphone slot, it indicates that no guest has the co-streaming at this microphone slot. In these embodiments, by determining the microphone slot type according to the field identification relevant to the microphone slot type, the microphone slot type of each microphone slot area may be accurately determined.

S120: At least part of views in the plurality of layers of views are processed according to the microphone slot type.

In these embodiments, different microphone slot types correspond to different display contents. For the video microphone slot, a video stream of the guest may be displayed in the microphone slot area; for the voice microphone slot, content relevant to the guest may be displayed in the microphone slot area; and for the available microphone slot, theme content of the live streaming interface may be displayed in the microphone slot area. Therefore, different microphone slot types correspond to different methods for processing the three layers of views in the microphone slot area.

Optionally, a method for processing at least part of views in the plurality of layers of views according to the microphone slot type may include: acquiring a hierarchical relationship of the plurality of layers of views; and processing at least part of views in the plurality of layers of views according to the hierarchical relationship and the microphone slot type.

The hierarchical relationship may be understood as which layer each view in the plurality of layers of views occupies. For the three layers of views in these embodiments, the hierarchical relationship may be determined according to a ranking and combining method, resulting in six hierarchical relationships. For example, two of the hierarchical relationships may include: the microphone slot layer view being located at an uppermost layer, the theme layer view being located at a middle layer, and the stream pulling player layer view being located at a lowest layer; and the microphone slot layer view being located at an uppermost layer, the stream pulling player layer view being located at a middle layer, and the theme layer view being located at a lowest layer. Further examples are not provided herein.

In these embodiments, a method for processing the at least part of views in the plurality of layers of views according to the hierarchical relationship and the microphone slot type may include: processing at least part of views in the plurality of layers of views in response to the microphone slot type being a video microphone slot, to display content in the stream pulling player layer view; processing at least part of views in the plurality of layers of views in response to the microphone slot type being a voice microphone slot, to display content in the microphone slot layer view; and processing at least part of views in the plurality of layers of views in response to the microphone slot type being an available microphone slot, to display content in the theme layer view.

Displaying content in the stream pulling player layer view may be understood as displaying the video stream in the microphone slot area. When the microphone slot type is the video microphone slot, if the stream pulling player layer view is obscured by the microphone slot layer view or the theme layer view, the microphone slot layer view or the theme layer view needs to be processed.

The content in the microphone slot layer view may be, for example, a target image corresponding to the microphone connected user or live streaming relevant information. When the microphone slot type is the voice microphone slot, if the microphone slot layer view is obscured by the stream pulling player layer view or the theme layer view, the stream pulling player layer view or the theme layer view needs to be processed.

Displaying content in the theme layer view may be understood as displaying the theme content on the live streaming interface. When the microphone slot type is the available microphone slot, if the theme layer view is obscured by the microphone slot layer view or the stream pulling player layer view, the microphone slot layer view or the stream pulling player layer view needs to be processed.

In these embodiments, the hierarchical relationship of the three layers of views includes: the microphone slot layer view being located at an uppermost layer, the theme layer view being located at a middle layer, and the stream pulling player layer view being located at a lowest layer.

Specifically, a method for processing the at least part of views in the plurality of layers of views according to the microphone slot type may include: in response to the microphone slot type being a video microphone slot, setting a display attribute of the microphone slot layer view to invisible, and cropping the theme layer view corresponding to the microphone slot area.

In these embodiments, when the microphone slot type is the video microphone slot, the video stream of the guest at the microphone slot area needs to be displayed on the stream pulling player layer view, and since the stream pulling player layer view is below the microphone slot layer view and the theme layer view, the microphone slot layer view and the theme layer view need to be processed, to prevent the microphone slot type view and the theme layer view from obscuring the stream pulling player layer view, thereby displaying the video stream of the guest at the microphone slot area. Specifically, when the microphone slot type is the video microphone slot, the display attribute of the microphone slot layer view corresponding to the microphone slot area is set to invisible, and the theme layer view corresponding to the microphone slot area is cropped to display the stream pulling player layer view.

Specifically, a method for cropping the theme layer view corresponding to the microphone slot area may include: determining position information of the microphone slot area on the live streaming interface; and cropping the theme layer view at the position information.

The position information may be represented by center point coordinates and size information of the microphone slot area, or represented by a plurality of vertex coordinates. When the position information is represented by the center point coordinates and the size information of the microphone slot area, a position of the microphone slot area on the live streaming interface may be obtained according to the central point coordinates and the size information. When the microphone slot area is rectangular, the position information may be represented by coordinates of four vertices. Coordinates of two vertices on a diagonal line are obtained for representation. Namely, the position of the microphone slot area on the live streaming interface may be obtained according to the representation of the coordinates of the four vertices or the coordinates of the two vertices on the diagonal line. In these embodiments, after determining the position information of the microphone slot area on the live streaming interface, the theme layer view at the position information is cropped, thereby accurately cropping the theme layer view in the microphone slot area of the video type.

Specifically, a method for processing at least part of views in the three layers of views according to the microphone slot type may include: in response to the microphone slot type being an available microphone slot, setting a display attribute of the microphone slot layer view to visible, and adjusting transparency of the microphone slot layer view, or setting the display attribute of the microphone slot layer view to invisible..

In these embodiments, when the microphone slot type is the available microphone slot, no guest has the co-streaming at the microphone slot area. In order to match the content displayed in the microphone slot area with the theme of the live streaming interface, the theme layer view at the microphone slot area needs to be displayed, and therefore the microphone slot layer view needs to be processed. Specifically, a method for processing the microphone slot layer view may include: setting the display attribute of the microphone slot layer view to visible and adjusting the transparency of the microphone slot layer view, or directly setting the display attribute of the microphone slot layer view to invisible.

The transparency of the microphone slot layer view may be adjusted to any value greater than or equal to 0 or less than 1. "0" represents completely transparent, and "1" represents completely opaque. In these embodiments, to display the content in the theme layer view located below the microphone slot layer view, the microphone slot layer view needs to be adjusted from completely opaque to partially transparent or completely transparent. In these embodiments, by adjusting the transparency of the microphone slot layer view, the theme content may be displayed in the microphone slot area which is the available microphone slot, thereby matching the microphone slot area with the theme of the theme live streaming interface, and improving a visual effect.

Specifically, a method for processing at least part of views in the three layers of views according to the microphone slot type may include: in response to the microphone slot type being a voice microphone slot, setting a display attribute of the microphone slot layer view to visible, and rendering a target image into the microphone slot layer view.

The target image is any of the following: a virtual image and a user avatar corresponding to the microphone slot area. The virtual image may be understood as a virtual character image, which may be pre-constructed; and the user avatar may be understood as an image uploaded by the user as the avatar.

In these embodiments, when the microphone slot type is the voice microphone slot, the guest in the microphone slot area establishes the voice co-streaming with the streamer. Herein, an image relevant to the guest may be displayed in the microphone slot layer view of the microphone slot area, and therefore the microphone slot layer view in the microphone slot area needs to be processed. Specifically, if the microphone slot type is the voice microphone slot, a method for processing the microphone slot layer view may include: setting the display attribute of the microphone slot layer view to visible, acquiring a target image corresponding to a user in the microphone slot area, and rendering the target image into the microphone slot layer view. In these embodiments, by displaying the target image corresponding to the user in the microphone slot area of the voice microphone slot, display diversity of the live streaming interface is improved, and the visual effect is improved.

Optionally, a method for rendering the target image into the microphone slot layer view may include: performing blur processing on the target image; and rendering the blurred target image into the microphone slot layer view.

A method for blur processing may be Gaussian blur or mean blur, which is not limited herein. According to this embodiment, by rendering the target image obtained after blur processing into the microphone slot layer view, the display diversity of the live streaming interface is enriched.

Optionally, after rendering the target image into the microphone slot layer view, the method further includes the following steps: acquiring live streaming relevant information corresponding to the microphone slot area; and displaying the live streaming relevant information in the microphone slot layer view.

The live streaming relevant information may include: information such as a countdown for the co-streaming and a gift address. In these embodiments, the live streaming relevant information corresponding to the microphone slot area may be acquired from the server, and finally the live streaming relevant information is displayed in the microphone slot layer view. Therefore, the live streaming relevant information of the guest may be visually seen, to assist interactions between the streamer and the guest, thereby improving a co-streaming interaction effect.

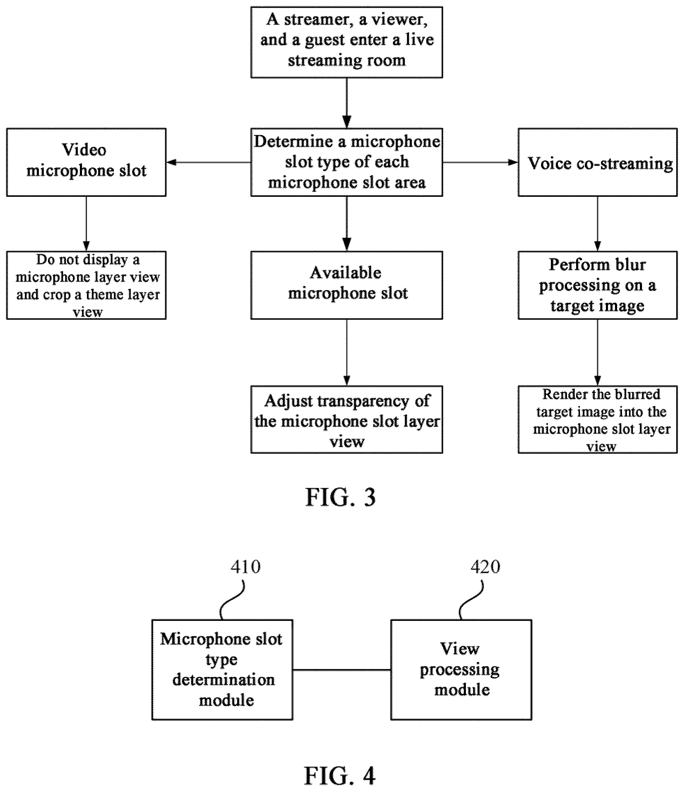

Based on the above embodiment, FIG. 3 is a principle diagram of a method for processing a live streaming interface according to an embodiment. As shown in FIG. 3, the process of the method includes:
1. A streamer, a viewer, and a guest enter a live streaming room.
2. Determine a microphone slot type of each microphone slot area.
3. If a current microphone slot area is a video microphone slot, do not display a microphone slot layer view, and crop a theme layer view.
4. If the current microphone slot area is an available microphone slot, adjust transparency of the microphone slot layer view.
5. If the current microphone slot area is a voice microphone slot, perform blur processing on a target image, and render the blurred target image into the microphone slot layer view.

According to the technical solution in these embodiments of the present disclosure, for each microphone slot area, the microphone slot type of the microphone slot area is determined, where the microphone slot type includes any one of the following: the video microphone slot, the voice microphone slot, and the available microphone slot; and the at least part of views in the plurality of layers of views are processed according to the microphone slot type. According to the method for processing a live streaming interface according to these embodiments of the present disclosure, the at least part of views in the plurality of layers of views are processed according to the microphone slot type, so that the microphone slot areas of different types are displayed in different forms, which may not only improve the display diversity of the live streaming interface, but also allow accurate display of corresponding contents in different microphone slot types, thereby preventing display errors.

FIG. 4 is a schematic diagram of a structure of an apparatus for processing a live streaming interface according to embodiments of the present disclosure. The live streaming interface includes a plurality of layers of views, and includes at least one microphone slot area. As shown in FIG. 4, the apparatus includes:
a microphone slot type determination module 410, configured to determine, for each microphone slot area, a microphone slot type of the microphone slot area, wherein the microphone slot type comprises any of: a video microphone slot, a voice microphone slot, and an available microphone slot; and
a view processing module 420, configured to process at least part of views in the plurality of layers of views according to the microphone slot type.

Optionally, the plurality of layers of views are three layers of views, which are a microphone slot layer view, a theme layer view, and a stream pulling player layer view respectively.

Optionally, the view processing module 420 is further configured to:
acquire a hierarchical relationship of the plurality of layers of views; and
process at least part of views in the plurality of layers of views according to the hierarchical relationship and the microphone slot type.

Optionally, the view processing module 420 is further configured to:
process at least part of views in the plurality of layers of views in response to the microphone slot type being a video microphone slot, to display content in the stream pulling player layer view;
process at least part of views in the plurality of layers of views in response to the microphone slot type being a voice microphone slot, to display content in the microphone slot layer view; and
process at least part of views in the plurality of layers of views in response to the microphone slot type being an available microphone slot, to display content in the theme layer view.

Optionally, the hierarchical relationship includes: the microphone slot layer view being located at an uppermost layer, the theme layer view being located at a middle layer, and the stream pulling player layer view being located at a lowest layer.

Optionally, the view processing module 420 is further configured to:
in response to the microphone slot type being a video microphone slot, set a display attribute of the microphone slot layer view to invisible, and cropping the theme layer view corresponding to the microphone slot area.

Optionally, the view processing module 420 is further configured to:
determine position information of the microphone slot area on the live streaming interface; and
crop the theme layer view at the position information.

Optionally, the view processing module 420 is further configured to:
in response to the microphone slot type being an available microphone slot, set a display attribute of the microphone slot layer view to visible, and adjusting transparency of the microphone slot layer view, or set the display attribute of the microphone slot layer view to invisible.

Optionally, the view processing module 420 is further configured to:
in response to the microphone slot type being a voice microphone slot, set a display attribute of the microphone slot layer view to visible, and rendering a target image into the microphone slot layer view.

Optionally, the view processing module 420 is further configured to:
perform blur processing on the target image; and
render the blurred target image into the microphone slot layer view.

Optionally, a live streaming relevant information display module is further included, and configured to:
acquire live streaming relevant information corresponding to the microphone slot area; and
display the live streaming relevant information in the microphone slot layer view.

The apparatus for processing a live streaming interface according to these embodiments of the present disclosure may perform the method for processing a live streaming interface according to any embodiment of the present disclosure, and has the corresponding functional modules and beneficial effects for performing the method.

It should be noted that the various units and modules included in the above apparatus are only divided according to functional logics, but are not limited to the above division, as long as the corresponding functions can be achieved; and in addition, the specific names of the functional units are only for the convenience of distinguishing each other, and are not used to limit the scope of protection of the embodiments of the present disclosure.

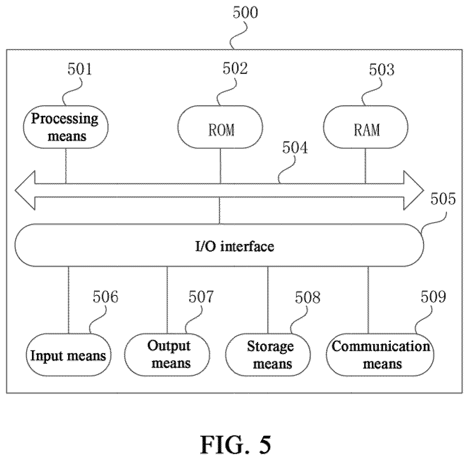

FIG. 5 is a schematic diagram of a structure of an electronic device according to embodiments of the present disclosure. Referring to FIG. 5 as below, FIG. 5 illustrates a schematic diagram of a structure of an electronic device (e.g., a terminal device or a server in FIG. 5) 500 suitable for implementing embodiments of the present disclosure. The terminal device in these embodiments of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle terminal (e.g., a vehicle navigation terminal), and fixed terminals such as a digital TV and a desktop computer. The electronic device shown in FIG. 5 is merely an example, and should not impose any limitation on the function and scope of use of the embodiments of the present disclosure.

As shown in FIG. 5, the electronic device 500 may include a processing means (e.g., a central processing unit and a graphics processing unit) 501, which may perform various appropriate actions and processing according to a program stored on a read-only memory (ROM) 502 or a program loaded from a storage apparatus 508 into a random access memory (RAM) 503.The RAM 503 further stores various programs and data required for the operation of the electronic device 500.The processing means 501, the ROM 502, and the RAM 503 are connected to one another through a bus 504.An input/output (I/O) interface 505 is also connected to the bus 504.

Typically, the following apparatuses may be connected to the I/O interface 505: an input means 506 including, for example, a touchscreen, a touchpad, a keyboard, a mouse, a camera, a microphone, an accelerometer, and a gyroscope; an output means 507 including, for example, a liquid crystal display (LCD), a speaker, and a vibrator; the storage apparatus 508 including, for example, a magnetic tape and a hard drive; and a communication means 509.The communication means 509 may allow the electronic device 500 to be in wireless or wired communication with other devices for data exchange. Although FIG. 5 shows the electronic device 500 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, embodiments of the present disclosure include a computer program product, which includes a computer program carried on a non-transitory computer-readable medium, where the computer program includes program code for performing the method shown in the flowchart. In these embodiments, the computer program may be downloaded and installed from the network through the communication means 509, or installed from the storage apparatus 508, or installed from the ROM 502.The computer program, when executed by the processing means 501, performs the above functions limited in the method in these embodiments of the present disclosure.

The names of messages or information exchanged between a plurality of apparatuses in the implementations of the present disclosure are used for illustrative purposes only, and are not used to limit the scope of these messages or information.

The electronic device according to these embodiments of the present disclosure and the method for processing a live streaming interface according to the above embodiments belong to the same inventive concept. For the technical details not exhaustively described in these embodiments, reference may be made to the above embodiments, and these embodiments and the above embodiments have the same beneficial effects.

Embodiments of the present disclosure provide a computer storage medium, having a computer program stored therein. The program, when executed by a processor, implements the method for processing a live streaming interface according to the above embodiment.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network).Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to: determine, for each microphone slot area, a microphone slot type of the microphone slot area, wherein the microphone slot type comprises any of: a video microphone slot, a voice microphone slot, and an available microphone slot; and process at least part of views in the plurality of layers of views according to the microphone slot type.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit does not constitute a limitation on the unit itself in some cases. For example, a first acquiring unit may also be described as "a unit for acquiring at least two Internet protocol addresses".

Herein, the functions described above may be at least partially executed by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

According to one or more embodiments of the present disclosure, a method for processing a live streaming interface is provided, where the live streaming interface includes a plurality of layers of views, and includes at least one microphone slot area, and the method includes:
determining, for each microphone slot area, a microphone slot type of the microphone slot area, wherein the microphone slot type comprises any of: a video microphone slot, a voice microphone slot, and an available microphone slot; and
processing at least part of views in the plurality of layers of views according to the microphone slot type.

Further, the plurality of layers of views are three layers of views, which are a microphone slot layer view, a theme layer view, and a stream pulling player layer view respectively.

Further, the processing at least part of views in the plurality of layers of views according to the microphone slot type includes:
acquiring a hierarchical relationship of the plurality of layers of views; and
processing at least part of views in the plurality of layers of views according to the hierarchical relationship and the microphone slot type.

Further, the processing at least part of views in the plurality of layers of views according to the microphone slot type includes:
processing at least part of views in the plurality of layers of views in response to the microphone slot type being a video microphone slot, to display content in the stream pulling player layer view;
processing at least part of views in the plurality of layers of views in response to the microphone slot type being a voice microphone slot, to display content in the microphone slot layer view; and
processing at least part of views in the plurality of layers of views in response to the microphone slot type being an available microphone slot, to display content in the theme layer view.

Further, the hierarchical relationship includes: the microphone slot layer view being located at an uppermost layer, the theme layer view being located at a middle layer, and the stream pulling player layer view being located at a lowest layer.

Further, the processing at least part of views in the plurality of layers of views according to the microphone slot type includes:
in response to the microphone slot type being a video microphone slot, setting a display attribute of the microphone slot layer view to invisible, and cropping the theme layer view corresponding to the microphone slot area.

Further, the cropping the theme layer view corresponding to the microphone slot area includes:
determining position information of the microphone slot area on the live streaming interface; and
cropping the theme layer view at the position information.

Further, the processing at least part of views in the plurality of layers of views according to the microphone slot type includes:
in response to the microphone slot type being an available microphone slot: setting a display attribute of the microphone slot layer view to visible, and adjusting transparency of the microphone slot layer view; or setting the display attribute of the microphone slot layer view to invisible.

Further, the processing at least part of views in the plurality of layers of views according to the microphone slot type includes:
in response to the microphone slot type being a voice microphone slot, setting a display attribute of the microphone slot layer view to visible, and rendering a target image into the microphone slot layer view.

Further, the rendering a target image into the microphone slot layer view includes:
performing blur processing on the target image; and
rendering the blurred target image into the microphone slot layer view.

Further, after rendering the target image into the microphone slot layer view, the method further includes:
acquiring live streaming relevant information corresponding to the microphone slot area; and
displaying the live streaming relevant information in the microphone slot layer view.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable sub combination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. A method for processing a live streaming interface, the live streaming interface comprising a plurality of layers of views, the live streaming interface comprising at least one microphone slot area, and the method comprising:
determining, for each microphone slot area, a microphone slot type of the microphone slot area, wherein the microphone slot type comprises any of: a video microphone slot, a voice microphone slot, and an available microphone slot; and
processing at least part of views in the plurality of layers of views according to the microphone slot type.

2. The method according to claim 1, wherein the plurality of layers of views are three layers of views, and the three layers of views comprise a microphone slot layer view, a theme layer view, and a stream pulling player layer view.

3. The method according to claim 2, wherein processing at least part of views in the plurality of layers of views according to the microphone slot type comprises:
acquiring a hierarchical relationship of the plurality of layers of views; and
processing at least part of views in the plurality of layers of views according to the hierarchical relationship and the microphone slot type.

4. The method according to claim 3, wherein processing at least part of views in the plurality of layers of views according to the hierarchical relationship and the microphone slot type comprises:
processing at least part of views in the plurality of layers of views in response to the microphone slot type being a video microphone slot, to display content in the stream pulling player layer view;
processing at least part of views in the plurality of layers of views in response to the microphone slot type being a voice microphone slot, to display content in the microphone slot layer view; and
processing at least part of views in the plurality of layers of views in response to the microphone slot type being an available microphone slot, to display content in the theme layer view.

5. The method according to claim 3, wherein the hierarchical relationship comprises: the microphone slot layer view being located at an uppermost layer, the theme layer view being located at a middle layer, and the stream pulling player layer view being located at a lowest layer.

6. The method according to claim 5, wherein processing at least part of views in the plurality of layers of views according to the hierarchical relationship and the microphone slot type comprises:
in response to the microphone slot type being a video microphone slot, setting a display attribute of the microphone slot layer view to invisible, and cropping the theme layer view corresponding to the microphone slot area.

7. The method according to claim 6, wherein cropping the theme layer view corresponding to the microphone slot area comprises:
determining position information of the microphone slot area on the live streaming interface; and
cropping the theme layer view at the position information.

8. The method according to claim 5, wherein processing at least part of views in the plurality of layers of views according to the hierarchical relationship and the microphone slot type comprises:
in response to the microphone slot type being an available microphone slot:
setting a display attribute of the microphone slot layer view to visible, and adjusting transparency of the microphone slot layer view; or
setting the display attribute of the microphone slot layer view to invisible.

9. The method according to claim 5, wherein processing at least part of views in the plurality of layers of views according to the hierarchical relationship and the microphone slot type comprises:
in response to the microphone slot type being a voice microphone slot, setting a display attribute of the microphone slot layer view to visible, and rendering a target image into the microphone slot layer view.

10. The method according to claim 9, wherein rendering the target image into the microphone slot layer view comprises:
performing blur processing on the target image; and
rendering the blurred target image into the microphone slot layer view.

11. The method according to claim 9, wherein after rendering the target image into the microphone slot layer view, the method further comprises:
acquiring live streaming relevant information corresponding to the microphone slot area; and
displaying the live streaming relevant information in the microphone slot layer view.

12. An apparatus for processing a live streaming interface, the live streaming interface comprising a plurality of layers of views, the live streaming interface comprising at least one microphone slot area, and the apparatus comprises:
a microphone slot type determination module, configured to determine, for each microphone slot area, a microphone slot type of the microphone slot area, wherein the microphone slot type comprises any of: a video microphone slot, a voice microphone slot, and an available microphone slot; and
a view processing module, configured to process at least part of views in the plurality of layers of views according to the microphone slot type.

13. An electronic device, comprising:
one or more processors; and
a storage, configured to store one or more programs,
wherein the one or more programs, when executed by the one or more processors, cause the one or more processors to implement the method for processing a live streaming interface according to any of claims 1 to 11.

14. A storage medium comprising computer-executable instructions, the computer-executable instructions, when executed by a computer processor, being configured to perform the method for processing a live streaming interface according to any of claims 1 to 11.
